# EUROPÄISCHE PATENTSCHRIFT

(11) **EP 2 741 068 B1**
(45) Veröffentlichungstag und Bekanntmachung des Hinweises auf die Patenterteilung: **02.11.2016**
(21) Anmeldenummer: 13195114.7
(22) Anmeldetag: 29.11.2013
(51) Int. Cl.: G01M 5/00

(54) **Prüfstand für ein Rotorblatt, Anordnung mit einem derartigen Prüfstand und Verfahren zum Betreiben eines derartigen Prüfstands**
Test bench for a rotor blade, assembly with such a test bench and a method for operating such a test bench
Banc d'essai pour une pale de rotor, dispositif doté d'un tel banc d'essai et procédé de fonctionnement d'un tel banc d'essai

(30) Priorität: 05.12.2012 DE 102012111838
(43) Veröffentlichungstag der Anmeldung: 11.06.2014
(73) Patentinhaber: Industrieanlagen-Betriebsgesellschaft mbH, 85521 Ottobrunn (DE)
(72) Erfinder: Fröschl, Jürgen, 85604 Zorneding (DE); Kinscherf, Simon, 81379 München (DE)
(74) Vertreter: Bohnenberger, Johannes

(56) Entgegenhaltungen:
- EP-A1- 2 336 744
- WO-A1-2008/145727
- WO-A1-2009/112796
- WO-A1-2011/091081
- WO-A2-2010/000711

## Beschreibung

Die Erfindung betrifft einen Prüfstand für ein Rotorblatt, insbesondere ein Rotorblatt für eine Windkraftanlage, gemäß dem Oberbegriff des Patentanspruchs 1. Ferner bezieht sich die Erfindung auf einer Anordnung mit einem derartigen Prüfstand und einem Rotorblatt sowie einem Verfahren zum Betreiben eines derartigen Prüfstands. Ein Prüfstand der eingangs genannten Art ist aus WO 2008/145727 A1 bekannt.

Der bekannte Prüfstand umfasst ein am Boden befestigtes bzw. vom Boden aufragendes Fundament, an dem ein Rotorblatt horizontal angebracht werden kann. Konkret erstreckt sich das Rotorblatt während des Prüfvorgangs hauptsächlich in horizontaler Richtung. Der bekannte Prüfstand dient dazu, das Rotorblatt in Schwingungen zu versetzen, um so zyklische Lasten, die auf das Rotorblatt wirken, simulieren zu können. Dazu ist ein Anregungsaggregat in Form eines Hydraulikzylinders vorgesehen, der am Boden fixiert ist und über einen Hebelarm eine Anregungskraft auf das Rotorblatt aufbringt. Gegenüber zuvor bekannten Anregungsaggregaten, die auf das Rotorblatt montiert wurden und die Schwingung über rotierende, exzentrische Massen eingeleitet haben, soll mit dem am Boden befestigten Anregungsaggregat die schwingende Masse reduziert werden. Das hat zur Folge, dass Schwingungen aufgebracht werden können, die eine Frequenz nahe der Eigenfrequenz des frei schwingenden Rotorblatts aufweisen. Insgesamt soll der bekannte Prüfstand damit die Prüfzeit reduzieren.

Da die schwingende Masse nicht beliebig reduzierbar ist, kann auch die Eigenfrequenz nicht über die Eigenfrequenz des frei schwingenden Rotorblatts erhöht werden. Selbst unter Testbedingungen, bei denen nahezu die Eigenfrequenz des frei schwingenden Rotorblatts erreicht wird, ist für einen Testlauf eine Zeit von mehreren Wochen bis Monaten einzukalkulieren.

WO 2009 / 112796 A1 beschreibt eine Schwingungsprüfanordnung für Rotorblätter einer Gasturbine. Ein mit Federn ausgestattetes Isolierungsgerät wird an einem an seinem Ende fest eingespannten Rotorblatt angebracht, um Schwingungsmoden zu hemmen.

EP 2 336 744 A1 bezieht sich auf ein Prüfgerät für Rotorblätter eines Helikopters, das mindestens eine Führungsschiene in der Nähe des Rotorblatts und mindestens eine an dem Rotorblatt gesicherte Lagerung aufweist. Eine Kraft wird über die Lagerung auf das Rotorblatt gewirkt, um die Fliehkraft auf das Rotorblatt zu simulieren.

WO 2010 / 000711 A2 beschreibt einen Prüfstand zum Testen von Rotorblättern einer Windturbine, der eine Vorrichtung zum Befestigen eines Endes des Rotorblattes, eine sich von der Befestigungsvorrichtung erstreckenden Belastungsvorrichtung sowie eine Anregungsvorrichtung aufweist.

WO 2011 / 091081 A1 beschreibt ein Strukturprüfsystem für Windturbinenblätter mit einem Prüfstand, der einen Teil des Windturbinenblatts trägt.

WO 2008 / 145727 A1 bezieht sich auf einen Ermüdungsprüfstand für Windturbinenblätter, der mittels einer Kraft kontrollierten Rückkopplung eine optimale Anregungsfrequenz der Windturbinenblätter ermittelt.

Die Aufgabe der Erfindung besteht darin, einen Prüfstand für ein Rotorblatt, insbesondere ein Rotorblatt für eine Windkraftanlage, anzugeben, der eine Reduktion der Prüfdauer ermöglicht. Ferner besteht die Aufgabe der Erfindung darin, eine Anordnung mit einem derartigen Prüfstand sowie ein Verfahren zum Betreiben eines derartigen Prüfstands anzugeben.

Erfindungsgemäß wird diese Aufgabe im Hinblick auf den Prüfstand durch den Gegenstand des Patentanspruchs 1, im Hinblick auf die Anordnung durch den Gegenstand des Patentanspruchs 12 und im Hinblick auf das Verfahren durch den Gegenstand des Patentanspruchs 13 gelöst.

Der Erfindung liegt der Gedanke zu Grunde, einen Prüfstand für ein Rotorblatt für eine Windkraftanlage anzugeben, wobei ein axiales Ende des Rotorblattes an einer Tragstruktur des Prüfstandes befestigbar ist. Der Prüfstand weist wenigstens ein Anregungsaggregat auf, das zur Anregung einer Schwingung des Rotorblatts mit dem Rotorblatt verbindbar ist. Wenigstens ein Federelement des Prüfstandes ist zwischen einer im Prüfbetrieb ortsfesten Anlenkstelle und dem Rotorblatt geschaltet, an einer Anlenkstelle befestigt und mit dem Rotorblatt für den Prüfbetrieb derart verbindbar, dass das Rotorblatt zur Beeinflussung des Schwingungsverhaltens durch das Federelement mit einer Federkraft beaufschlagbar ist. Die Kraftrichtung der Federkraft weist wenigstens eine Komponente auf, die im Prüfbetrieb parallel zur Hauptbelastungsrichtung des Rotorblatts verläuft. Die Hauptbelastungsrichtung kann vertikal verlaufen, insbesondere senkrecht zur Spannweitenrichtung des Rotorblatts. Im Allgemeinen kann vorgesehen sein, dass die Kraftrichtung der Federkraft wenigstens eine Komponente aufweist, die im Prüfbetrieb senkrecht zum Rotorblatt verläuft.

Die Anlenkstelle ist bei dem erfindungsgemäßen Prüfstand im Prüfbetrieb, insbesondere nur im Prüfbetrieb ortsfest. Zwischen einzelnen Prüfzyklen kann die Anlenkstelle variabel sein. Mit anderen Worten kann die Anlenkstelle verschoben bzw. versetzt werden, wenn der Prüfstand nicht in Betrieb ist. Im Betrieb bleibt die Anlenkstelle ortsfest, insbesondere um eine gleichmäßig wiederholbare Belastung auf den Prüfkörper aufzubringen.

Bei dem erfindungsgemäßen Prüfstand ermöglicht das zwischen der ortsfesten Anlenkstelle und dem Rotorblatt geschaltete Federelement eine Erhöhung der Steifigkeit des Gesamtsystems, die zu einer Erhöhung der Eigenfrequenz führt. Dadurch sind Eigenfrequenzen erreichbar, die über der Eigenfrequenz des frei schwingenden Rotorblattes liegen. Somit kann die Prüfzeit signifikant reduziert werden.

Die Tragstruktur des Prüfstandes ermöglicht eine einseitige Befestigung des Rotorblattes, das sich von der Tragstruktur weg wie ein Kragträger erstreckt. Dabei ist ein axiales Ende des Rotorblattes, bspw. die Blattwurzel, an der Tragstruktur fest gelagert. Das andere axiale Ende, bspw. die Blattspitze ist frei angeordnet, so dass das Rotorblatt entlang seiner axialen Länge, d.h. entlang seiner Spannweite, schwingen kann. Der Anschluss des Rotorblattes an die Tragstruktur erfolgt in an sich bekannter Weise, so dass die im Prüfbetrieb auftretenden Kräfte und Momente von der Tragstruktur aufgenommen werden.

Die Tragstruktur kann ein von einem Boden aufragendes Fundament, bspw. ein Betonfundament, sein, das für die Aufnahme der auftretenden Kräfte und Momente in üblicher Weise dimensioniert und ausgelegt ist. Derartige Fundamente sind für große Rotorblätter üblich. Andere Tragstrukturen sind möglich, bspw. wenn kleinere Rotorblätter oder andere rotorblattähnliche Bauteile geprüft werden.

Die Ausrichtung des befestigten Rotorblatts hängt von der Ausrichtung der Tragstruktur ab. Es ist zweckmäßig, wenn die Tragstruktur so ausgerichtet ist, dass das Rotorblatt im Wesentlichen parallel zu einer Lasteinleitungsfläche verläuft, an der die ortsfeste Anlenkstelle des Federelements vorgesehen ist bzw. die ortsfesten Anlenkstellen der Federelemente vorgesehen sind. Dadurch wird die Montagefreundlichkeit verbessert.

Üblicherweise erstreckt sich das an der Tragstruktur befestigte Rotorblatt im Wesentlichen horizontal bzw. allgemein frei schwebend über den Boden des Prüfstandes, der in diesem Fall die Lasteinleitungsfläche für das Federelement / die Federelemente bildet. Die Tragstruktur, konkret die Fläche der Tragstruktur, in der der Anschluss für das Blatt angeordnet ist, erstreckt sich vorzugsweise vertikal. Die Erfindung ist nicht auf diese Ausrichtung des Rotorblattes durch die Tragstruktur eingeschränkt. Eine andere Orientierung des Rotorblattes ist möglich. Beispielsweise kann die Tragstruktur kippbar sein.

Das Federelement ist dazu vorgesehen, das Rotorblatt zur Beeinflussung seines Schwingungsverhaltens mit einer Federkraft zu beaufschlagen. Dazu ist das Federelement einerseits an der ortsfesten Anlenkstelle befestigt und andererseits mit dem Rotorblatt für den Prüfbetrieb verbindbar. Das Federelement ist somit im Prüfbetrieb zwischen das Rotorblatt und die Anlenkstelle geschaltet. Durch die Anlenkstelle wird das Federelement gelagert. Die Verbindung zwischen dem Federelement und der Anlenkstelle kann in einer bevorzugten Variante gelenkig sein.

Die Federkraft wird durch die schwingende Auslenkung des Rotorblattes im Prüfbetrieb erzeugt und wirkt als Rückstellkraft der Auslenkbewegung des Rotorblattes entgegen. Damit wird die Steifigkeit des Gesamtsystems erhöht.

Die Kraftrichtung der vom Federelement erzeugten Federkraft weist wenigstens eine Komponente auf, die senkrecht zum Rotorblatt, insbesondere vertikal, verläuft. Die Kraftrichtung kann daher schräg oder senkrecht zum Rotorblatt verlaufen, um das Schwingungsverhalten des Rotorblattes zu beeinflussen.

Im Allgemeinen kann der Prüfstand mehr als ein Federelement, insbesondere 2, 3, 4, 5, 6, 7, 8, 9, 10, 11, 12, 13, 14, 15 ,16, 17, 18, 19, 20 oder mehr als 20 Federelemente aufweisen. Die Anzahl der Federelemente hängt von der Länge des jeweiligen Rotorblattes und der Abstimmung des Systems ab. Es hat sich gezeigt, dass eine Anzahl von 2 bis 6, insbesondere 3 bis 5 und vorzugsweise 3 Federlementen, die jeweils separat mit dem Rotorblatt verbindbar und jeweils mit separaten Anlenkstellen verbunden sind, ausreicht, um gute Prüfbedingungen zu erfüllen. Die Federelemente sind vorzugsweise in unterschiedlichen Abständen vom Fundament angeordnet. Die Abstände zwischen den Federelementen können regelmäßig sein. Ferner kann vorgesehen sein, dass entlang der Spannweite (Spannweitenrichtung) des Rotorblatts bzw. mit steigendem Abstand vom Fundament die Federsteifigkeiten der Federelemente variieren. Konkret hat es sich als vorteilhaft herausgestellt, wenn die Federsteifigkeit der Federelemente mit steigendem Abstand vom Fundament sinkt. Die im Bereich der Rotorblattspitze angeordneten Federelemente weisen also eine kleinere Federsteifigkeit als die Federelemente auf, die nahe am Fundament, insbesondere nahe der Rotorblattwurzel, angeordnet sind. Die Federsteifigkeiten können derart gewählt werden, dass die Biegelinie des frei schwingenden Rotorblatts nachgestellt werden kann. Insofern können unterschiedliche Biegelinienverläufe simuliert werden. Dies erfolgt durch entsprechende Anpassung der Federsteifigkeiten der einzelnen Federelemente. Durch die Wahl unterschiedlicher Federsteifigkeiten entlang des zu prüfenden Rotorblattes können vorgegebene Zielbiegelinien nachgebildet werden. Dies verbessert die Realitätsnähe des Dauerbelastungstests.

In diesem Zusammenhang wird darauf hingewiesen, dass im Rahmen der Anmeldung Verbindungen allgemein nicht direkt hergestellt sein müssen. Vielmehr kann zwischen zwei miteinander verbundenen Elementen wenigstens ein weiteres Element als Verbindungsglied vorgesehen sein, die Verbindung also auch mittelbar erfolgen.

Ferner wird darauf hingewiesen, dass im Rahmen der Anmeldung der Prüfstand an sich, also ohne ein darin angeordnetes Rotorblatt offenbart und beansprucht wird. Zusätzlich wird die Anordnung mit einem derartigen Prüfstand und einem Rotorblatt offenbart und beansprucht.

Bei einer bevorzugten Ausführungsform des erfindungsgemäßen Prüfstands ist wenigstens ein Halter vorgesehen, der unmittelbar mit dem Rotorblatt verbindbar und mit dem Federelement verbunden ist. Der Halter dient im Wesentlichen zur Lasteinleitung bzw. Lastübertragung auf das Rotorblatt. Der Halter kann beispielsweise als Lastschere ausgebildet sein, die das Rotorblatt umgreift. Vorzugsweise weist die Lastschere ein Innenprofil auf, das dem Flügelprofil des Rotorblatts entspricht. Der Halter bzw. die Lastschere ist mit dem Federelement gekoppelt. Mit anderen Worten bildet der Halter das Verbindungsglied zwischen dem Federelement und dem Rotorblatt. Das Federelement ist also zwischen dem Halter und der Anlenkstelle am Boden angeordnet bzw. wirksam.

Zwischen dem Federelement und dem Halter kann ein Übersetzungsgetriebe, beispielsweise in Form eines Hebels oder eines Flaschenzugs, angeordnet sein. Das Übersetzungsgetriebe kann derart angepasst sein, dass ein Federweg des Federelements in einen Amplitudenweg des Halters übertragbar ist. Der Amplitudenweg des Halters kann größer als der Federweg des Federelements sein. Mit der erfindungsgemäß beabsichtigten Erhöhung der Eigenfrequenz im Prüfbetrieb erhöht sich entsprechend die Geschwindigkeit der Federschwingung. Gleichzeitig sind große Federwege erforderlich, um die belastungsgerechte Auslenkung des Rotorblatts, insbesondere an der Blattspitze, zu erreichen. Um diesem Spannungsfeld gerecht zu werden, ist es vorteilhaft, mit einem möglichst kleinen Federweg des Federelements eine möglichst große Auslenkung des Rotorblatts, also einen möglichst großen Amplitudenweg des Halters, zu erreichen. Dazu dient vorteilhaft das Übersetzungsgetriebe, das in bevorzugten Ausgestaltungen als zweiseitiger Hebel oder als Flaschenzug ausgebildet ist. Bei Verwendung eines zweiseitigen Hebels greift das Federelement vorzugsweise an einem kurzen Hebelarm an. Der Halter kann mit einem langen bzw. vergleichsweise längeren Hebelarm verbunden sein.

Das Federelement kann einen hydropneumatischen Zylinder aufweisen bzw. durch einen hydropneumatischen Zylinder gebildet sein. Der hydropneumatische Zylinder weist federartige Eigenschaften auf. Die federartigen Eigenschaften des hydropneumatischen Zylinders sind vorzugsweise variabel. Insbesondere kann die Federsteifigkeit des als Federelement wirkenden hydropneumatischen Zylinders einfach eingestellt werden, um eine vorgegebene Zielbiegelinie zu realisieren.

In einer weiteren bevorzugten Ausgestaltung ist vorgesehen, dass das Federelement mit wenigstens zwei Haltern verbunden ist. Die Halter können an unterschiedlichen Lasteinleitungspunkten mit dem Rotorblatt unmittelbar verbindbar sein. Auf diese Weise kann die Anzahl der Federelemente reduziert werden, wodurch der konstruktive Aufbau des Prüfstands vereinfacht wird.

Ferner kann vorgesehen sein, dass wenigstens 2, insbesondere 3, 4, 5, 6 Federelemente mit einer einzelnen Anlenkstelle am Boden verbunden sind. Auf diese Weise wird ermöglicht, dass die Federelemente nahe am Rotorblatt anordenbar sind. Gleichzeitig wird die Anzahl der Anlenkstellen reduziert, so dass die Konstruktion des Prüfstands weiter vereinfacht ist.

Bei einer besonders bevorzugten Ausführungsform ist jeweils ein einzelner Halter über ein einzelnes Federelement mit einer einzelnen Anlenkstelle gekoppelt. Insgesamt kann vorgesehen sein, dass entlang des Rotorblatts mehrere Halter anordenbar sind. Dabei ist jeder Halter vorzugsweise durch eine einzelne Feder mit einer gesonderten Anlenkstelle am Boden gekoppelt. Diese Ausführungsform, bei der jedem Halter ein individuelles Federelement zugewiesen ist, hat sich als besonders vorteilhaft für die gewünschte Erhöhung der Eigenfrequenz herausgestellt. Bei dieser Konstruktion werden die höchsten Eigenfrequenzen und Testgeschwindigkeiten erreicht und die Prüfdauer somit erheblich reduziert.

Es hat sich überdies als vorteilhaft erwiesen, wenn das Federelement unmittelbar mit dem Halter verbunden ist. Dies hat zur Folge, dass zwischen dem Rotorblatt und dem Federelement ausschließlich der Halter zur Erhöhung der schwingenden Masse beiträgt. Somit wird zusätzlich zu der Erhöhung der Steifigkeit auch insgesamt die schwingende Masse reduziert. Folglich sind höhere Eigenfrequenzen erreichbar, wodurch die Testgeschwindigkeit weiter erhöht bzw. die Zeit für einen Prüfvorgang reduziert wird.

Das Federelement kann mit dem Halter und/oder der Fixierstelle, insbesondere der Anlenkstelle durch ein flexibles Zugmittel, bspw. ein Seil oder eine Kette, oder durch ein starres Druck- und Zugmittel, bspw. eine Koppelstange, verbunden sein. Bei der Variante, wobei das Federelement durch ein flexibles Zugmittel mit dem Halter und/oder der Fixierstelle verbunden ist, kann das flexible Zugmittel mit einer Vorspannung beaufschlagt werden. Das bedeutet, dass zusätzlich zu den zyklischen Lasten mit Hilfe der angeregten Schwingungen statische Lasten auf das Rotorblatt übertragen werden können. So kann die Mittellage der Biegelinien vorgegeben bzw. eingestellt werden. Ferner kann durch eine geeignete Wahl der Vorspannung die quasistatische Auftriebslast, die durch die Anströmung des Rotorblatts im Realbetrieb wirkt, simuliert werden. Auf diese Weise ist zusätzlich zur Verkürzung des Testzeitraums eine Prüfung des Rotorblatts möglich, die die im realen Betrieb wirkenden Kräfte gut berücksichtigt.

Alternativ kann das Federelement mit dem Halter und/oder der Fixierstelle durch ein Druck-/Zugmittel, beispielsweise eine Koppelstange, verbunden sein, das eine Länge aufweist oder längenvariabel ist derart, dass eine statische Last, insbesondere eine Vorspannung, auf das Rotorblatt aufgebracht werden kann. Das Druck-/Zugmittel ermöglicht die Einleitung von Belastungen in wechselnden Richtungen. Konkret kann mittels des Zug-/Druckmittels sowohl eine Zugbelastung, als auch eine Druckbelastung in das Rotorblatt eingeleitet werden. Grundsätzlich kann die Schwingungsanregung mit aus dem Stand der Technik bekannten Anregungsaggregaten erfolgen. Beispielsweise können im Prüfbetrieb auf dem Rotorblatt befestigte Unwuchtanreger verwendet werden, die das Rotorblatt zum Schwingen anregen. Bevorzugt ist eine Ausführungsform, bei welcher das Anregungsaggregat vom Rotorblatt derart entkoppelt ist, dass die Masse des Anregungsaggregats selbst nicht zur gesamten schwingenden Masse beiträgt. So kann das das Anregungsaggregat beispielsweise zwischen dem Federelement und der Anlenkstelle angeordnet sein. Im Unterschied zu einem auf das Rotorblatt montierten Unwuchterreger stützt sich das Anregungsaggregat so über die Anlenkstelle am Boden ab. Das Anregungsaggregat ist vorzugsweise im Sinne einer Parallelschaltung parallel zum Federelement angeordnet bzw. wirksam.

Ferner kann ein Lastmittel vorgesehen sein, das an einer ortsfesten Fixierstelle, insbesondere einer ortsfesten Anlenkstelle befestigt und mit dem Rotorblatt für den Prüfbetrieb verbindbar ist derart, dass das Rotorblatt mit einer statischen Vorspannkraft beaufschlagbar ist, deren Kraftrichtung wenigstens eine Komponente aufweist, die senkrecht zum Rotorblatt verläuft. Auf diese Weise können die im Realbetrieb auftretenden statischen Belastungen, beispielsweise die infolge der Anströmung des Rotorblatts auftretenden Auftriebskräfte, simuliert werden.

Es wird darauf hingewiesen, dass eine senkrechte Kraftkomponente im Rahmen der Anmeldung lediglich einen Bestandteil des tatsächlich wirkenden Kraftvektors darstellt. Der tatsächlich wirkende Kraftvektor kann vielmehr auch eine von der senkrechten abweichende Richtung einnehmen, beispielweise schräg verlaufen. Insofern ist der Kraftvektor als Resultierende einer waagrechten und einer senkrechten Kraftkomponente bzw. der entsprechenden Komponentenvektoren zu verstehen.

Gemäß einem nebengeordneten Aspekt beruht die Erfindung auf dem Gedanken, eine Anordnung mit dem zuvor beschriebenen Prüfstand und einem Rotorblatt für eine Windkraftanlage anzugeben. Dabei ist das Rotorblatt am Fundament befestigt und über das Federelement mit der Anlenkstelle verbunden.

Ein weiterer nebengeordneter Aspekt der Erfindung betrifft ein Verfahren zum Betreiben des zuvor beschriebenen Prüfstands oder der erläuterten Anordnung mit dem Prüfstand und einem Rotorblatt. Bei dem Verfahren wird die Federsteifigkeit des Federelements derart eingestellt, dass wenigstens eine Eigenfrequenz, insbesondere die erste Eigenfrequenz, des Rotorblatts oder eines Rotorblattsegments erhöht wird. Im Rahmen des hier beschriebenen Betriebsverfahrens ist also vorgesehen, die Federelemente so zu wählen, dass die Eigenfrequenz erhöht wird. Die Federsteifigkeiten bzw. Federelemente mit einer geeigneten Federsteifigkeit stimmt der Fachmann mit dem jeweils zu prüfenden Rotorblatt ab, wobei die Länge, Geometrie und Masse bzw. die Steifigkeit des zu prüfenden Rotorblatts berücksichtigt werden.

Die Erfindung wird im Folgenden anhand von Ausführungsbeispielen unter Bezugnahme auf die beigefügten, schematischen Zeichnungen näher erläutert. Darin zeigen
- Fig. 1: eine Seitenansicht eines erfindungsgemäßen Prüfstands nach einem bevorzugten Ausführungsbeispiel, wobei jeweils ein Federelement mit mehreren Haltern verbunden ist;
- Fig. 2: eine Seitenansicht eines erfindungsgemäßen Prüfstands nach einem weiteren bevorzugten Ausführungsbeispiel, wobei die Federelemente jeweils unmittelbar mit den Haltern verbunden sind;
- Fig. 3: eine Seitenansicht eines erfindungsgemäßen Prüfstands nach einem weiteren bevorzugten Ausführungsbeispiel, wobei das Federelement über ein umgelenktes Zugmittel mit einem Halter verbunden ist;
- Fig. 4: eine Seitenansicht eines Lastgeschirrs für den erfindungsgemäßen Prüfstand gemäß einem bevorzugten Ausführungsbeispiel;
- Fig. 5: eine Seitenansicht eines Federelements für einen erfindungsgemäßen Prüfstand gemäß einem bevorzugten Ausführungsbeispiel, wobei das Federelement über eine Koppelstange mit einer Anlenkstelle am Boden verbunden ist; und
- Fig. 6: eine Seitenansicht eines erfindungsgemäßen Prüfstands nach einem weiteren bevorzugten Ausführungsbeispiel, der für die Prüfung eines Rotorblattsegments angepasst ist;
- Fig. 7: eine Seitenansicht eines erfindungsgemäßen Prüfstands nach einem weiteren bevorzugten Ausführungsbeispiel, wobei hydraulische Federelemente vorgesehen sind;
- Fig. 8: ein Federelement für den Prüfstand gemäß Fig. 7;
- Fig. 9: eine Seitenansicht eines Anregungsaggregats eines weiteren erfindungsgemäßen Prüfstands nach einem bevorzugten Ausführungsbeispiel, wobei das hydraulische Federelement horizontal ausgerichtet ist; und
- Fig. 10: eine Seitenansicht eines Anregungsaggregats eines weiteren erfindungsgemäßen Prüfstands nach einem bevorzugten Ausführungsbeispiel mit einem Flaschenzug zur Wegübersetzung.

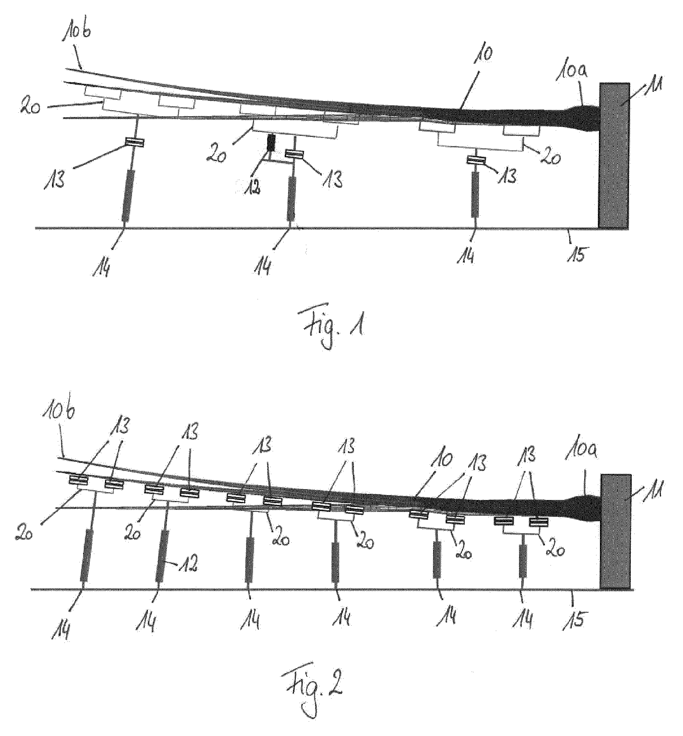

Die nachfolgend näher erläuterten Fig. 1 bis 3 zeigen jeweils eine Seitenansicht eines Prüfstands für ein Rotorblatt, der insbesondere zur Schwingungsprüfung von Rotorblättern eingesetzt werden. Im Besonderen eignet sich der dargestellte Prüfstand für die Prüfung von Rotorblättern von Windkraftanlagen. Dazu weist der Prüfstand ein Fundament 11 auf, das von einem Boden 15 aufragt bzw. am Boden 15 befestigt ist. Das stabile Fundament 11 weist eine nicht dargestellte Befestigungsvorrichtung für das Rotorblatt 10 auf. Das Rotorblatt 10 ist mit einer Seitenfläche des Fundments 11 verbunden oder verbindbar, insbesondere derart, dass sich das Rotorblatt 10 im Wesentlichen horizontal erstreckt. Das schließt nicht aus, dass sich das Rotorblatt 10 zumindest teilweise aus der Horizontalen erhebt, beispielsweise aufgrund der geometrischen Form des Rotorblatts 10. Das Rotorblatt 10 kann auch infolge seiner Masse nach unten geneigt sein. Im Allgemeinen schwebt das Rotorblatt 10 jedoch nach Art eines Kragträgers frei über dem Boden 15.

Während des Prüfvorgangs wird das Rotorblatt 10 zu Schwingungen angeregt, um die in der Realität auftretenden zyklischen Lasten zu simulieren. Die Anregung der Schwingungen erfolgt vorzugsweise über ein Anregungsaggregat, das beispielsweise als Unwuchterreger ausgebildet sein kann. Der Unwuchterreger kann auf dem Rotorblatt 10 montierbar sein. Andere Arten von Anregungsaggregaten sind ebenfalls im Rahmen der vorliegenden Erfindung verwendbar. Bei dem Ausführungsbeispiel gemäß Fig. 1 ist beispielsweise vorgesehen, einen Aktuator 12 als Anregungsaggregat einzusetzen, der parallel zu einem Federelement 13 angeordnet bzw. geschaltet ist. Der Aktuator 12 kann als Linearmotor ausgebildet sein.

Um den Zeitbedarf für einen Prüfvorgang zu reduzieren, ist vorgesehen, das Rotorblatt 10 über wenigstens ein Federelement 13 mit dem Boden 15 zu koppeln. Dadurch wird die Steifigkeit erhöht, so dass die Eigenfrequenz gesteigert wird. Somit kann eine vordefinierte Anzahl von Schwingungen in einem relativ kürzeren Testzeitraum durchlaufen werden. Die Zwischenschaltung des Federelements 13 zwischen dem Rotorblatt 10 und dem Boden 15 kann auf unterschiedliche Art und Weise erfolgen.

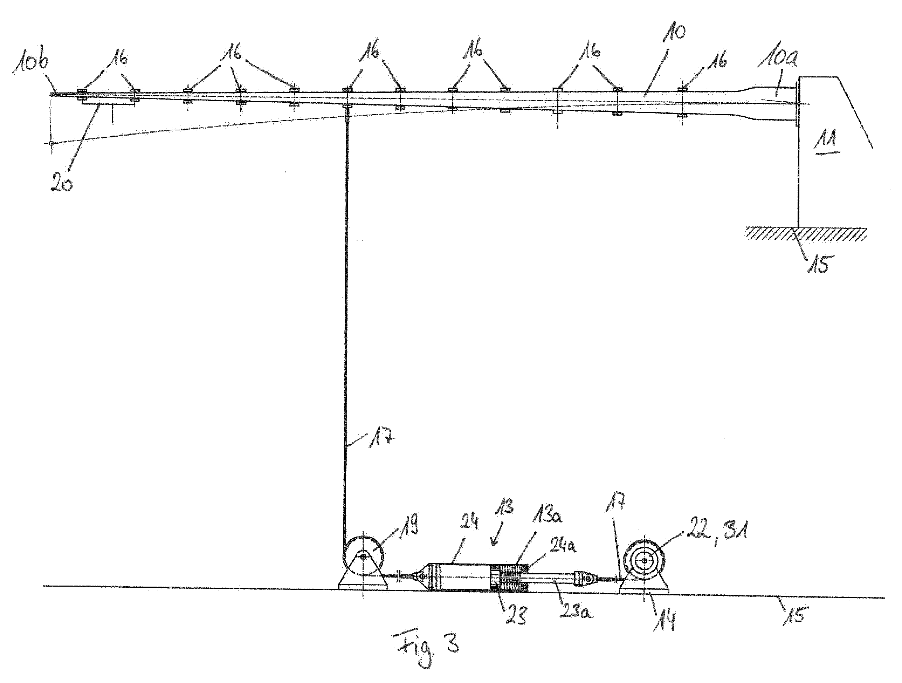

Bei dem Ausführungsbeispiel gemäß Fig. 1 ist beispielsweise vorgesehen, dass das Rotorblatt 10 über Lastgeschirre 20 mit dem Federelement 13 verbunden ist. Die Lastgeschirre 20 können durch Gelenkbalkenkonstruktionen gebildet sein. Konkret sind die Lastgeschirre 20 mit Haltern 16 direkt gekoppelt, die das Rotorblatt 10 umgreifen. Die Halter 16 sind aus Gründen der Übersichtlichkeit in den Fig. 1 und 2 nicht gezeigt, in Fig. 3 jedoch gut erkennbar. Bei dem Ausführungsbeispiel gemäß Fig. 1 sind jeweils vier Halter 16, die zueinander beabstandet entlang des Rotorblatts 10 angeordnet sind, über ein mehrteiliges Lastgeschirr mit dem Federelement 13 gekoppelt. Das Federelement 13 ist wiederum über ein flexibles Zugmittel 17, insbesondere ein Seil, oder ein starres Druck-/Zugmittel 18, insbesondere eine Koppelstange, mit einer Anlenkstelle 14 am Boden 15 verbunden. Es sind drei Federelemente 13 vorgesehen, die entlang des Rotorblatts 10 mit mehreren, konkret 12, Haltern 16 zusammenwirken, um das Schwingungsverhalten des Rotorblatts 10 zu beeinflussen.

Bei dem Ausführungsbeispiel gemäß Fig. 2 ist eine alternative Anordnung der Federelemente 13 vorgesehen. Insbesondere sind die Federelemente 13 bei dem Ausführungsbeispiel gemäß Fig. 2 unmittelbar mit den Haltern 16 verbunden bzw. gekoppelt. Das bedeutet, dass die Federelemente 13 nahe am Rotorblatt 10 angeordnet sind. Das Lastgeschirr 20 verbindet jeweils zwei Federelemente 13 mit der Anlenkstelle 14 am Boden 15. Zwischen dem Lastgeschirr 20 und der Anlenkstelle 14 kann ferner ein Lastmittel 31 vorgesehen sein. Dabei ist ein einzelnes Lastmittel 31 für den gesamten Prüfstand ausreichend. Alternativ können, wie in Fig. 2 dargestellt, mehrere Lastmittel 31 vorgesehen sein, die jeweils zwischen einem Lastgeschirr 20 und einer Anlenkstelle 14 angeordnet sind. Durch das oder die Lastmittel 31 kann eine Vorspannung auf das Rotorblatt 10 aufgebracht werden. Die Vorspannung kann dazu genutzt werden, eine Mittellage der Biegelinien festzulegen und/oder die statische Auftriebskraft zu simulieren, die im Realbetrieb auf das Rotorblatt 10 wirkt.

Bei dem Ausführungsbeispiel gemäß Fig. 2, bei dem die Federelemente 13 unmittelbar mit den Haltern 16 verbunden sind, wird eine hohe Eigenfrequenz erreicht, wodurch die Prüfzeit deutlich verringert werden kann. Im Unterschied zu dem Ausführungsbeispiel gemäß Fig. 1, bei dem auch die Lastgeschirre 20 einen Teil der schwingenden Masse darstellen, umfasst die schwingende Masse gemäß Fig. 2 lediglich das Rotorblatt 10 selbst und die Halter 16. Zusätzlich zu dem Effekt, dass die Steifigkeit durch die Federelemente 13 erhöht wird, trägt die Reduktion der schwingenden Masse zu einer Erhöhung der Eigenfrequenz und somit zur Reduktion der Prüfzeit bei.

Fig. 3 zeigt ein Ausführungsbeispiel des Prüfstands, der sich zusätzlich durch eine kompakte Bauweise auszeichnet. Aus Gründen der Übersichtlichkeit ist lediglich ein einziges Federelement 13 mit entsprechender Anbindung zwischen Boden 15 und Rotorblatt 10 dargestellt. Tatsächlich können mehrere derartiger Federelemente 13 entlang des Rotorblatts 10 angeordnet sein.

Das Federelement 13 umfasst einen Zylinder 24, in dem ein Kolben 23 geführt ist. Eine Druckfeder 13a erstreckt sich zwischen dem Kolben 23 und einem Zylinderboden 24a. Der Kolben 23 weist eine Kolbenstange 23a auf, die mit einem Zugmittel 17 bzw. Seil gekoppelt ist. Das Seil verläuft über eine Seilrolle 22, die fest mit dem Boden 15 verbunden ist. Die feste Verbindung zwischen der Seilrolle 22 und dem Boden 15 bildet die Anlenkstelle 14.

Die Seilrolle 22 kann auch zur statischen Vorspannung des Zugmittels 17 bzw. Seils genutzt werden und bildet somit zusätzlich ein Lastmittel 31. Auf diese Weise kann das gesamte Rotorblatt 10 während des Prüfvorgangs einer statischen Last ausgesetzt werden, wobei durch unterschiedliche Vorspannungen an verschiedenen Haltern 16 beispielsweise die im Betrieb auftretende Auftriebskraft simulierbar ist. Dies verbessert eine realitätsnahe Simulation bzw. Prüfung, bei der die statischen und zyklischen Lasten überlagert werden.

Der Zylinder 24 ist ebenfalls mit einem Seil gekoppelt, das über eine Umlenkrolle 19 zu einem Halter 16 geführt ist. Der Halter 16 ist mit einem Rotorblatt 10 verbindbar bzw. während des Prüfvorgangs mit dem Rotorblatt 10 verbunden. Das Federelement 13 bzw. das Federpaket umfassend die Druckfeder 13a, den Zylinder 24 und den Kolben 23, ist im Wesentlichen horizontal zwischen der Seilrolle 22 und der Umlenkrolle 19 angeordnet. Auf diese Weise wird erreicht, dass das Fundament 11 eine relativ geringe Höhe aufweisen kann, ohne den Federweg des Federelements 13 zu beeinträchtigen.

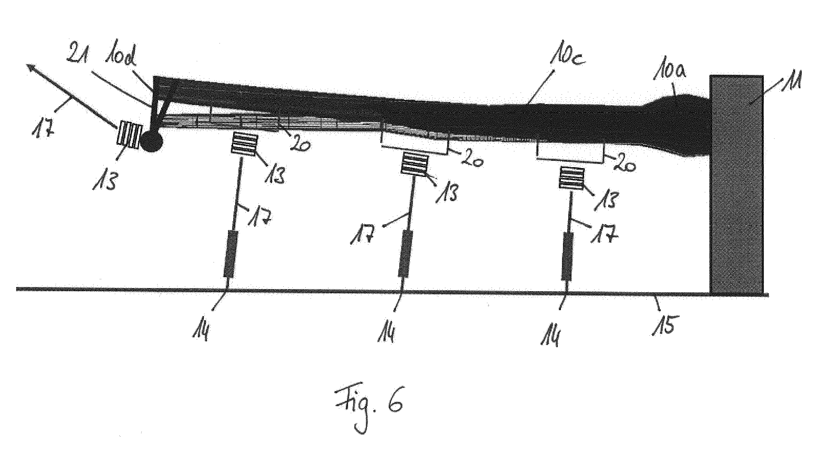

Fig. 6 zeigt ein Ausführungsbeispiel des erfindungsgemäßen Prüfstands, das im Wesentlichen dem Ausführungsbeispiel gemäß Fig. 1 ähnelt. Anstelle eines vollständigen Rotorblatts 10 ist ein Rotorblattsegment 10c an der Tragstruktur 11 befestigt. Das Rotorblattsegment 10c umfasst einen Teil des Rotorblattflügels sowie die Rotorblattwurzel 10a. Über Halter 16, die aus Gründen der Übersichtlichkeit in Fig. 6 nicht dargestellt sind, ist das Rotorblattsegment 10c mit Lastgeschirren 20 gekoppelt. Zwischen den Lastgeschirren 20 und jeweils einer Anlenkstelle 14 am Boden 15 ist jeweils ein Federelement 13 angeordnet.

Am Flügelstumpf 10d des Rotorblattsegments 10c ist ein Ausleger 21 befestigt. Der Ausleger 21 erstreckt sich im Wesentlichen senkrecht zum Rotorblattsegment 10c und ist mit einem flexiblen Zugmittel, insbesondere einem Seil, verbunden. Die Verbindung zwischen dem Ausleger 21 und dem Zugmittel 17 bzw. Seil erfolgt mittelbar über ein Federelement 13. Das Seil greift unter einem Winkel an dem Hebelarm 21 an. Über das Seil wird nicht nur eine senkrechte, sondern auch eine waagrechte Kraftkomponente auf das Rotorblattsegment 10c aufgebracht. Die auf das Rotorblattsegment 10c wirkende Belastung, die bestehen würde, wenn das gesamte Rotorblatt 10 vorhanden wäre, kann somit nachgebildet werden. Wegen der kurzen Länge und entsprechend reduzierter Masse des Rotorblattsegments 10c im Vergleich zu einem vollständigen Rotorblatt 10 wird gleichzeitig die Eigenfrequenz erhöht. Auf diese Weise kann an einem Rotorblattsegment 10c die Prüfung eines gesamten Rotorblatts 10 simuliert werden und zwar in einem kürzeren Prüfzeitraum, als dies mit konventionellen Methoden möglich ist.

Bei dem Ausführungsbeispiel gemäß Fig. 3 ist das Federelement 13 mit einem einzelnen Halter 16 gekoppelt. Alternativ kann vorgesehen sein, dass jeweils zwei oder mehrere, insbesondere drei oder vier Halter 16 über ein Lastgeschirr 20 mit einem einzelnen Federelement 13 verbunden sind. Dies ist in Fig. 3 im Bereich der Blattspitze 10b des Rotorblatts 10 angedeutet.

Grundsätzlich können entlang des Rotorblatts 10 mehrere Halter 16 angeordnet sein. Zwischen der Rotorblattwurzel 10a und der Rotorblattspitze 10b sind vorzugsweise in regelmäßigen Abständen Halter 16 angeordnet. Die Halter 16 sind mit den Federelementen 13 bzw. Federpaketen verbunden, wobei jeweils ein einzelner Halter 16 mit einem einzelnen Federelement 13 bzw. Federpaket gekoppelt sein kann. Alternativ können zwei Halter 16 mit einem einzelnen Federelement 13, beispielsweise über ein Lastgeschirr 20, gekoppelt sein. Ferner kann vorgesehen sein, dass ein einzelner Halter mit einem einzelnen Federelement 13 verbunden ist, wobei mehrere Federelemente 13 mit einer einzigen Anlenkstelle 14 verbunden sind. Dabei sind die einzelnen Kombinationen aus Halter 16 und Federelement 13 mit einem Lastgeschirr 20 zusammengeführt und beispielsweise über ein starres Druck-/Zugmittel 18 bzw. eine Koppelstange oder ein flexibles Zugmittel 17 bzw. ein Seil mit der Anlenkstelle 14 verbunden.

Um die im Realbetrieb auftretende Biegelinie des Rotorblatts 10 nachzubilden, hat es sich weiterhin als vorteilhaft erwiesen, wenn die Federelemente 13, die entlang des Rotorblatts 10 angeordnet sind, mit steigendem Abstand zum Fundament 11 jeweils niedrigere Federsteifigkeiten aufweisen. Insgesamt können die Federelemente 13 also unterschiedliche Federsteifigkeiten umfassen. Das Federelement 13, das der Rotorblattspitze 10b am nächsten ist, weist vorzugsweise die niedrigste Federsteifigkeit auf. Hingegen weist das Federelement, das der Rotorblattwurzel 10a am nächsten angeordnet ist, vorzugsweise die höchste Federsteifigkeit auf.

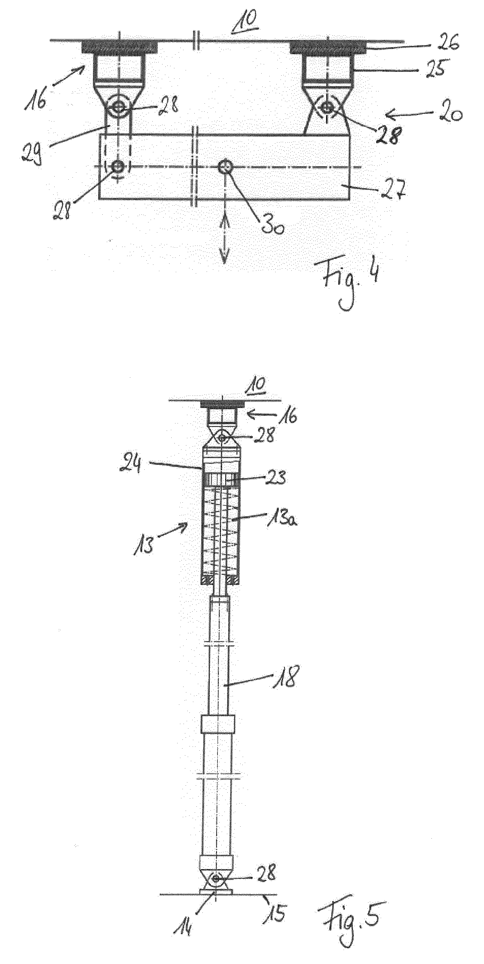

Fig. 4 zeigt beispielhaft ein Lastgeschirr 20, das direkt mit zwei Haltern 16 gekoppelt ist. Die Halter 16 umfassen einen Bügel 25, der im Wesentlichen starr ausgebildet ist und das Rotorblatt 10 umgreift. Zwischen dem Bügel 25 und dem Rotorblatt 10 umfasst der Halter 16 Pufferelemente 26, die eine Beschädigung des Rotorblatts 10 vermeiden. Die Pufferelemente 26 können beispielsweise als Gummipuffer ausgebildet sein.

Das Lastgeschirr 20 ist direkt mit den beiden Haltern 16 verbunden, insbesondere über Drehgelenke 28. Ferner weist das Lastgeschirr 20 einen Querbalken 27 auf, der die beiden Halter 16 verbindet. Einseitig ist der Querbalken 27 direkt über das Drehgelenk 28 mit einem der Halter 16 gekoppelt. Gegenüberliegend ist zwischen dem Querbalken 27 und dem Halter 16 eine Ausgleichsstange 29 angeordnet, die sowohl mit dem Halter 16, als auch mit dem Querbalken 28 über jeweils ein Drehgelenk 28 verbunden ist. Die Ausgleichsstange 29 gleicht Winkelunterschiede zwischen den beiden Haltern 16 aus, die durch die Biegung des Rotorblatts 10 während der Schwingung auftreten können. Dadurch wird vermieden, dass der starre Querbalken 27 die Biegung bzw. Flexibilität des Rotorblatts 10 stört bzw. blockiert.

Mittig am Querbalken ist ferner ein Angriffspunkt 30 angeordnet, an welchem eine Koppelstange oder ein Seil angreifen kann. Alternativ kann am Angriffspunkt 30 auch das Federelement 13 direkt angreifen.

Fig. 5 zeigt ein zwischen dem Rotorblatt 10 und dem Boden 15 angeordnetes Federelement 13, wobei die Verbindung zwischen dem Federelement 13 und der Anlenkstelle 14 am Boden 15 durch ein Druck-/Zugmittel 18 bzw. eine Koppelstange erfolgt. Die Koppelstange kann Teil einer Teleskopeinrichtung sein, die aktiv betätigbar ist, um das Rotorblatt 10 zu Schwingungen anzuregen. Alternativ kann die Teleskopeinrichtung auch arretierbar sein, um die Koppelstange je nach zu prüfendem Rotorblatt 10 in der richtigen Länge zu arretieren und/oder mit einer statischen Vorspannkraft zu beaufschlagen. Das Federelement 13 umfasst eine Druckfeder 13a, die in einem Zylinder 24 angeordnet ist und einen Kolben 23 stützt. Im Allgemeinen ist das Federelement 13 analog zu dem waagrecht angeordneten Federelement 13 gemäß Fig. 3 ausgebildet. Das Federelement 13 ist direkt über ein Drehgelenk 28 mit dem Halter 16 gekoppelt. Der Halter 16 umgreift das Rotorblatt 10.

Im Allgemeinen kann das Federelement 13 eine Druckfeder 13a, insbesondere eine Schraubendruckfeder, aufweisen. Andere Federelemente 13 sind denkbar. Die Federelemente 13 bewirken einerseits eine Erhöhung der Steifigkeit, so dass die Eigenfrequenz erhöht wird. Andererseits führt die Verwendung der Federelemente 13, wenn sie direkt an den Haltern 16 angeordnet sind, zu einer Reduktion der schwingenden Masse, was ebenfalls zur Erhöhung der Eigenfrequenz beiträgt.

Der Prüfstand ist grundsätzlich für alle Arten von Rotorblättern 10 oder ähnlichen, flügelartigen Elementen bzw. allgemein länglichen, biegeflexiblen Bauteilen geeignet. Beispielsweise könnten mit dem erfindungsgemäßen Prüfstand auch Flugzeugflügel bzw. Tragflächen einer Schwingungsprüfung unterzogen werden. Besonders bevorzugt ist der Einsatz des Prüfstands zum Prüfen von Rotorblättern 10 für Windkraftanlagen, insbesondere Rotorblättern 10 unterschiedlicher Länge und Bauweise. Der Prüfstand ist insgesamt flexibel einsetzbar und umfasst auch unterschiedliche Lastgeschirre 20 bzw. Halter 16, die für verschiedene Rotorblattquerschnitte angepasst sind.

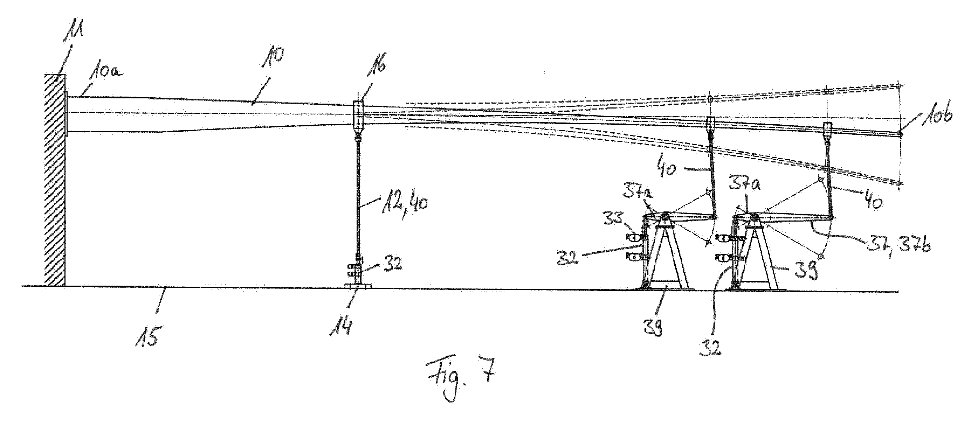

Fig. 7 zeigt ein weiteres Ausführungsbeispiel des Prüfstands. Der Prüfstand umfasst ein Fundament 11, das auf einem Boden 15 steht. Das Fundament 11 ragt im Wesentlichen vertikal vom horizontalen Boden 15 auf. Das Fundament 11 weist eine Befestigungsmöglichkeit für ein Rotorblatt 10 auf. Das Rotorblatt 10 erstreckt sich ausgehend von dem Fundament 11 im Wesentlichen horizontal bzw. ist parallel zum Boden 15 ausgerichtet. An drei unterschiedlichen Stellen entlang des Rotorblatts 10 sind Federelemente 13 mit dem Rotorblatt 10 verbunden. Insbesondere sind entlang des Rotorblatts 10 beabstandet zueinander Halter 16 angebracht, die mit jeweils einem Federelement 13 verbunden sind. Die Federelemente 13 können jeweils einen hydropneumatischen Zylinder 32 umfassen. Darauf wird später näher eingegangen.

Ferner können wenigstens ein, insbesondere zwei, Federelemente 13 ein Übersetzungsgetriebe, vorzugsweise in Form eines zweiseitigen Hebels 37, aufweisen. Wie in Figur 7 gut erkennbar ist, ist der Hebel 37 jeweils auf einem Gestell 39 angeordnet bzw. auf dem Gestell 39 drehbar gelagert. Der Hebel 37 weist einen kurzen Hebelarm 37a und einen langen Hebelarm 37b auf. Der kurze Hebelarm 37a ist mit dem hydropneumatischen Zylinder 32 verbunden. Der lange Hebelarm 37b ist durch eine Koppelstange 40 mit dem Halter 16 bzw. dem Rotorblatt 10 gekoppelt. Durch den Hebel 37 wird ein relativ kleiner Federweg des Federelements 13 auf einen relativ großen Amplitudenweg übersetzt. So können mit kleinen Federwegen hohe Amplituden bei hoher Geschwindigkeit (Prüffrequenz) erreicht werden.

Durch die Wahl der Hebellänge, insbesondere die Länge des langen Hebelarms 37b, lässt sich das Federelement 13 an unterschiedlichen Positionen des Rotorblatts 10 einsetzen. Dabei können die Federwege der einzelnen Federelemente 13 entlang des Rotorblatts 10 im Wesentlichen gleich gehalten werden; gleichzeitig ist ein realitätsnaher Verlauf der Biegelinie (größere Auslenkung bzw. Amplitude an der Blattspitze als an der Blattwurzel) einstellbar.

Die Hebelverhältnisse und damit Kräfte und Wege können bei Bedarf in Stufen oder auch stufenlos verändert werden. Außerdem kann der Hebel 37 mit Federn, Gummibändern oder ähnlichen Elementen entlastet werden, so dass der Hebel 37 im Gleichgewicht ist.

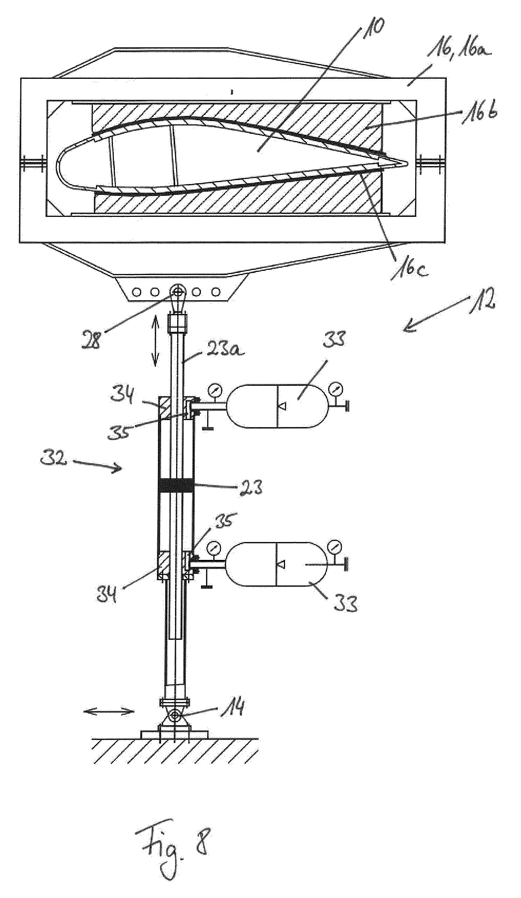

Das rotorblattwurzelnah angreifende Federelement 13 benötigt einen relativ kleinen Federweg, um der vergleichsweise geringen Auslenkung des schwingenden Rotorblatts 10 zu folgen. Ein Hebel 37 ist daher nicht notwendig. Vielmehr kann der hydropneumatische Zylinder 32 die Anlenkstelle 14 direkt mit dem Halter 16 am Rotorblatt 10 verbinden. Diese Konfiguration ist in der folgenden Fig. 8 dargestellt.

Zwischen dem Hebel 37 und dem Halter 16 bzw. dem Rotorblatt 10 kann ein Federelement 13 angeordnet sein. Bevorzugt ist es, wenn das Federelement 13 zwischen dem Hebel 37 und dem Boden 15 bzw. der Anlenkstelle 14 am Boden 15 angeordnet ist. Das Federelement 13 kann durch den hydropneumatischen Zylinder 32 gebildet sein.

Der Halter 16 umfasst einen Metallrahmen 16a, insbesondere einen Stahlrahmen. Der Metallrahmen kann zweigeteilt sein, wobei ein oberer Teil und ein unterer Teil lösbar miteinander verbunden oder verbindbar sind. Ferner umfasst der Halter 16 eine Holzeinlage 16b, die zwischen dem Metallrahmen 16a und dem Rotorblatt 10 angeordnet ist. Zwischen der Holzeinlage 16b und dem Rotorblatt kann außerdem eine Dämpfungsplatte 16c, insbesondere in Form einer Gummiplatte bzw. -matte, angeordnet sein. Die Holzeinlage 16b ist zumindest auf ihrer dem Rotorblat 10 zugewandten Seite an die Form des Rotorblatts 10 angepasst.

Das Federelement 13 in Form eines hydropneumatischen Zylinders 32, insbesondere eines hydrostatisch gelagerten Hydraulik-Gleichlaufzylinders, ist in Fig. 8 detailliert dargestellt. Der hydropneumatische Zylinder 32 umfasst einen Kolben 23, der in einer Kolbenführung 23b verschiebbar gelagert ist. Durch die Kolbenführung 23b erstreckt sich eine Kolbenstange 23a, die fest mit dem Kolben 23 verbunden ist. Die Kolbenstange 23a ragt beidseitig über den Kolben 23 hinaus. Überdies durchgreift die Kolbenstange 23a die Kolbenführung 23b bzw. den eigentlichen Zylinder, der an beiden axialen Enden hydrostatische Lager 34 aufweist. Diese dichten den Zylinder bzw. die Kolbenführung 23b fluiddicht gegen die Umgebung ab. Ferner umfassen die hydrostatischen Lager 34 jeweils einen Verbindungskanal 35, der den Innenraum der Kolbenführung 23b mit einem Druckspeicher 33 fluidverbindet.

Die Kolbenstange 23a weist ein oberes Ende und ein unteres Ende auf. Das untere Ende ist frei verschiebbar in einem Hohlrohrfortsatz 36 des hydropneumatischen Zylinders 32 angeordnet. Der Hohlrohrfortsatz 36 ist mit einer Anlenkstelle 14 gelenkig verbunden, insbesondere mit einem bodennahen Festlager drehgelenkig gekoppelt. Die Anlenkstelle 14 bzw. das Festlager sind vorzugsweise am Boden 15 fixiert. Das obere Ende der Kolbenstange 23a ist gelenkig mit dem Halter 16 gekoppelt, der das zu prüfende Rotorblatt 10 trägt. Die gelenkige Kopplung erfolgt durch ein Drehgelenk 28.

Die Druckspeicher 33 sind zweigeteilt und weisen eine Pneumatikseite 33a und eine Hydraulikseite 33b auf. Die Pneumatikseite 33a ist vorzugsweise mit einem Gas, insbesondere Stickstoff, gefüllt. Die Hydraulikseite 33b kann mit einem Hydrauliköl gefüllt sein, das über die Verbindungskanäle 35 von der Hydraulikseite 33b des Druckspeichers 33 zur Kolbenführung 23b fließen kann. Die Druckspeicher 33 weisen jeweils auf der Hydraulikseite 33b und der Pneumatikseite 33a einen Drucksensor 33c bzw. ein Manometer sowie ein Ventil 33d auf. Über die Drucksensoren 33c kann der hydraulische Druck bzw. pneumatische Druck auf der Hydraulikseite 33b bzw. Pneumatikseite 33a überwacht werden. Die Einstellung der Drücke und somit die Einstellung der Federsteifigkeit des hydropneumatischen Zylinders 32 erfolgt über die Ventile 33d. Die Hydraulikseite 33b und die Pneumatikseite 33a sind fluiddicht voneinander getrennt, beispielsweise durch eine Membran oder einen Kolben. Konkret ist die Kolbenführung 23b durch den Kolben 23 in einen oberen Raum und einen unteren Raum unterteilt. Der obere Raum ist mit einem ersten Druckspeicher 33 und der untere Raum mit einem zweiten Druckspeicher 33 fluidverbunden. Durch einen Fluidaustausch zwischen den Druckspeichern 33, insbesondere deren Hydraulikseiten 33b, und der Kolbenführung 23b kann der Druck im oberen oder unteren Raum der Kolbenführung 23b erhöht oder verringert werden. Durch entsprechende Druckverteilung zwischen dem oberen Raum und dem unteren Raum ist die Federsteifigkeit des hydropneumatischen Zylinders 32 einstellbar.

Der hydropneumatische Zylinder 32 ermöglicht es vorteilhaft, die Reibkräfte zu minimieren, so dass nur eine geringe Erwärmung entsteht. Ferner ist der Energiebedarf des hydropneumatischen Zylinders 32, der als passive Feder wirkt, gering, da kaum Öl zu- und abzuführen ist.

Die Federkraft selbst wird durch Kompression eines unter Vordruck befindlichen Gases (üblicherweise Stickstoff) auf der Pneumatikseite 33a des Druckspeichers 33 erzeugt. Das Hydraulikfluid, insbesondere Öl, kann ebenfalls unter Vordruck stehen, damit beim völligen Aus-oder Einfahren der Kolbenstange 23a kein Unterdruck entsteht. Als Druckspeicher 33 kommt auch jeder andere Speicher bzw. Ausgleichsbehälter in Frage. Zweckmäßigerweise ist der Druckspeicher 33 derart ausgelegt, dass dieser den Belastungen standhält und eine lineare Kennlinie erzeugt. Bevorzugte Druckspeicher 33 sind Blasenspeicher, Kolbenspeicher und/oder Membranspeicher.

Anstelle der Aufnahme von Gas kann der Druckspeicher 33 bzw. dessen Pneumatikseite 33a auch zur Aufnahme einer Hydraulikflüssigkeit angepasst sein. Der Druckspeicher 33 kann also als Druckgasspeicher oder als Druckfluidspeicher ausgebildet sein. Im Druckfluidspeicher kann eine kompressible Druckflüssigkeit, z. B. Silikonöl, gelagert sein.

Die in Fig. 8 dargestellten hydropneumatischen Feder kann mit einer Regelung und Überwachung gekoppelt sein, die sicherstellt, dass im Prüfbetrieb keine Abweichungen bei den eingestellten Federsteifigkeiten erfolgen.

Neben der hydropneumatischen Feder können auch andere Federelemente 13 eingesetzt werden, beispielsweise Spiralfedern, Gummiseile, Elastomerdämpfer und/oder Luftfedern. Es ist auch denkbar, einen Linearmotor als Federelement zu verwenden.

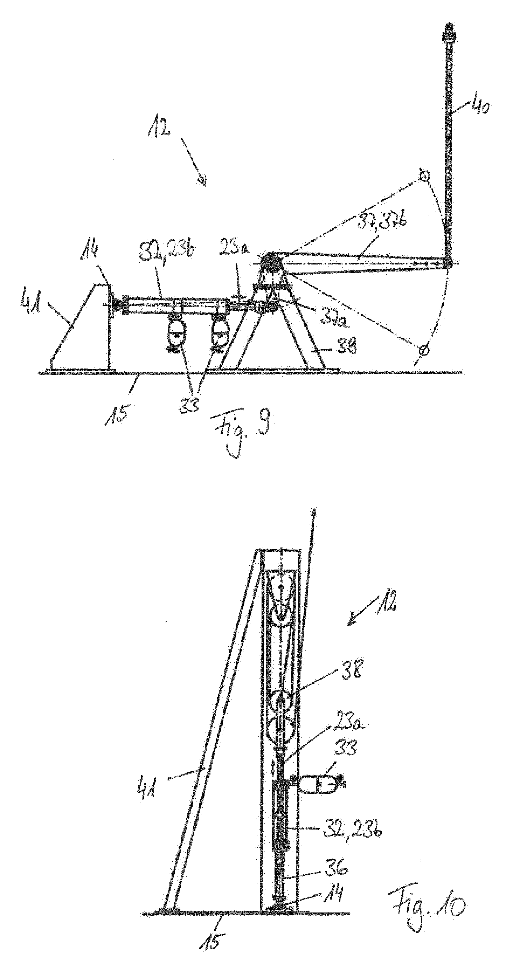

Es ist möglich, den hydropneumatischen Zylinder 32 horizontal auszurichten, beispielsweise um einen kompakten Aufbau des Prüfstands zu erreichen. Ein entsprechend gestaltetes Federelement 13 zeigt Fig. 9. Der hydropneumatische Zylinder 32 entspricht in seiner Bauweise dem hydropneumatischen Zylinder 32 gemäß Fig. 8. Bei dem Ausführungsbeispiel gemäß Fig. 9 ist der hydropneumatische Zylinder 32 jedoch horizontal angeordnet und greift an einem kurzen Hebelarm 37a des Hebels 37 an, der rechtwinklig zum langen Hebelarm 37b des Hebels 37 angeordnet ist. Zur Fixierung des hydropneumatischen Zylinders 32 ist eine Stütze 41 vorgesehen, die die Anlenkstelle 14 für das Federelement 13 bildet.

Ein weiteres Ausführungsbeispiel des Federelements 13 ist in Fig. 10 dargestellt. Das gezeigte Federelement 13 umfasst einen Flaschenzug 38, der ein Übersetzungsgetriebe bildet. Der Flaschenzug 38 ermöglicht die Übersetzung eines relativ kleinen Federwegs des Federelements 13 zu einem relativ großen Amplitudenweg. Der Flaschenzug 38 ist einerseits mit dem am Boden 15 fixierten hydropneumatischen Zylinder 32 und andererseits mit einer Stütze 41 verbunden, die sich auf dem Boden 15 abstützt. Ein freies Seilende des Flaschenzugseils ist mit dem Halter 16 oder dem Rotorblatt 10 verbunden bzw. verbindbar. Der hydropneumatische Zylinder 32 ist analog zu den vorhergehenden Ausführungsbeispielen gemäß Fig. 7, 8 und 9 ausgebildet.

Der Flaschenzug 38 umfasst vorzugsweise zwei Festrollen und zwei bewegliche Rollen. Der Flaschenzug 38 kann eine Übersetzung von 1:4 aufweisen. Die unteren 2 Rollen können seitlich geführt sein, damit sie bei den Hubbewegungen nicht horizontal pendeln. Die oberen und unteren Seilrollen können jeweils nebeneinander angebracht sein, so dass sich die Bauhöhe verringert.

Im Rahmen der vorliegenden Anmeldung werden außerdem folgende Ausführungsformen offenbart:
1. Prüfstand für ein Rotorblatt 10, insbesondere ein Rotorblatt 10 für eine Windkraftanlage,
   - mit einer Tragstruktur 15, an der ein axiales Ende des Rotorblattes 10 befestigbar ist, und
   - wenigstens einem Anregungsaggregat, das zur Anregung einer Schwingung des Rotorblatts 10 mit dem Rotorblatt 10 verbindbar ist,
   gekennzeichnet durch
   wenigstens ein Federelement 13, das an einer ortsfesten Anlenkstelle 14 befestigt und mit dem Rotorblatt 10 für den Prüfbetrieb verbindbar ist derart, dass das Rotorblatt 10 zur Beeinflussung des Schwingungsverhaltens durch das Federelement 13 mit einer Federkraft beaufschlagbar ist, deren Kraftrichtung wenigstens eine Komponente aufweist, die parallel zu einer Hauptbelastungsrichtung des Rotorblatts 10 verläuft.
2. Prüfstand nach Ausführungsform 1,
   **dadurch gekennzeichnet,** dass
   wenigstens ein Halter 16 vorgesehen ist, der unmittelbar mit dem Rotorblatt 10 verbindbar und mit dem Federelement 13 verbunden ist.
3. Prüfstand nach Ausführungsform 2,
   **dadurch gekennzeichnet,** dass
   das Federelement 13 mit wenigstens zwei Haltern 16 verbunden ist.
4. Prüfstand nach einer der vorhergehenden Ausführungsformen,
   **dadurch gekennzeichnet,** dass
   wenigstens zwei Federelemente 13 mit einer einzelnen Anlenkstelle 14 am Boden 15 verbunden sind.
5. Prüfstand nach einer der Ausführungsformen 2 bis 4,
   **dadurch gekennzeichnet**, dass
   jeweils ein einzelner Halter 16 über ein einzelnes Federelement 13 mit einer einzelnen Fixierstelle oder Anlenkstelle 14 gekoppelt ist.
6. Prüfstand nach einer der Ausführungsformen 2 bis 5,
   **dadurch gekennzeichnet,** dass
   das Federelement 13 unmittelbar mit dem Halter 16 verbunden ist.
7. Prüfstand nach einer der vorhergehenden Ausführungsformen,
   **dadurch gekennzeichnet,** dass
   das Federelement 13 mit dem Halter 16 und/oder der Anlenkstelle 14 durch ein flexibles Zugmittel 17 oder ein starres Druck- und Zugmittel 18 verbunden ist.
8. Prüfstand nach Ausführungsform 7,
   **dadurch gekennzeichnet,** dass
   das Zugmittel 17 zwischen dem Halter 16 und dem Federelement 13 über eine Umlenkrolle 19 geführt ist derart, dass das Federelement 13 im Wesentlichen horizontal ausgerichtet ist.
9. Prüfstand nach einer der vorhergehenden Ausführungsformen, **dadurch gekennzeichnet,** dass
   ein Lastmittel 31 an einer ortsfesten Anlenkstelle 14 befestigt und mit dem Rotorblatt 10 für den Prüfbetrieb verbindbar ist derart, dass das Rotorblatt 10 mit einer statischen Vorspannkraft beaufschlagbar ist, deren Kraftrichtung wenigstens eine Komponente aufweist, die senkrecht zum Rotorblatt 10 verläuft.
10. Prüfstand nach einer der vorhergehenden Ausführungsformen, **dadurch gekennzeichnet,** dass
   zwischen dem Federelement 13 und dem Halter 16 ein Übersetzungsgetriebe, insbesondere ein zweiseitiger Hebel 37 oder ein Flaschenzug 38, angeordnet ist derart, dass ein Federweg des Federelements 13 in einen Amplitudenweg des Halters 16 übertragbar ist, wobei der Amplitudenweg des Halters 16 größer als der Federweg des Federelements 13 ist.
11. Prüfstand nach einer der vorhergehenden Ausführungsformen, **dadurch gekennzeichnet,** dass
   das Federelement 13 einen Hydraulikzylinder 32 umfasst, der zumindest teilweise das Federelement 13 bildet.
12.Anordnung mit einem Prüfstand gemäß einer der vorhergehenden Ausführungsformen und einem Rotorblatt 10 oder einem Rotorblattsegment, insbesondere für eine Windkraftanlage, wobei das Rotorblatt 10 oder das Rotorblattsegment an der Tragstruktur 11 befestigt und über das Federelement 13 mit der ortsfesten Anlenkstelle 14 verbunden ist.
13.Verfahren zum Betreiben eines Prüfstands oder einer Anordnung nach einer der vorhergehenden Ausführungsformen, wobei die Federsteifigkeit des Federelements 13 derart eingestellt wird, dass wenigstens eine Eigenfrequenz, insbesondere die erste Eigenfrequenz des Rotorblatts 10 oder des Rotorblattsegments erhöht wird.

### Bezugszeichenliste

- 10: Rotorblatt
- 10a: Rotorblattwurzel
- 10b: Rotorblattspitze
- 10c: Rotorblattsegment
- 10d: Flügelstumpf
- 11: Fundament
- 12: Aktuator
- 13a: Druckfeder
- 13: Federelement
- 14: Anlenkstelle
- 15: Boden
- 16: Halter
- 16a: Metallrahmen
- 16b: Holzeinlage
- 16c: Dämpfungsplatte
- 17: flexibles Zugmittel
- 18: starres Zug-/Druckmittel
- 19: Umlenkrolle
- 20: Lastgeschirr
- 21: Hebelarm
- 22: Seilrolle
- 23: Kolben
- 23a: Kolbenstange
- 23b: Kolbenführung
- 24: Zylinder
- 24a: Zylinderboden
- 25: Bügel
- 26: Pufferelement
- 27: Querbalken
- 28: Drehgelenk
- 29: Ausgleichsstange
- 30: Angriffspunkt
- 31: Lastmittel
- 32: hydropneumatischer Zylinder
- 33: Druckspeicher
- 33a: Pneumatikseite
- 33b: Hydraulikseite
- 33c: Drucksensor
- 33d: Ventil
- 34: hydrostatisches Lager
- 35: Verbindungskanal
- 36: Hohlrohrfortsatz
- 37: Hebel
- 38: Flaschenzug
- 39: Gestell
- 40: Koppelstange
- 41: Stütze

## Patentansprüche

1. Prüfstand für ein Rotorblatt (10) für eine Windkraftanlage mit einer Tragstruktur (15), an der ein axiales Ende des Rotorblattes (10) befestigbar ist, und wenigstens einem Anregungsaggregat, das zur Anregung einer Schwingung des Rotorblatts (10) mit dem Rotorblatt (10) verbindbar ist,
**gekennzeichnet durch**
Federelemente (13), die jeweils zwischen einer im Prüfbetrieb ortsfesten Anlenkstelle (14) und dem Rotorblatt geschaltet sind, an der Anlenkstelle (14) befestigt und mit dem Rotorblatt (10) für den Prüfbetrieb verbindbar sind derart, dass das Rotorblatt (10) zur Beeinflussung des Schwingungsverhaltens **durch** die Federelemente (13) mit Federkräften beaufschlagbar ist, deren Kraftrichtung wenigstens eine Komponente aufweist, die parallel zu einer Hauptbelastungsrichtung des Rotorblatts (10) verläuft.

2. Prüfstand nach Anspruch 1,
**dadurch gekennzeichnet, dass**
wenigstens ein Halter (16) vorgesehen ist, der unmittelbar mit dem Rotorblatt (10) verbindbar und mit dem Federelement (13) verbunden ist.

3. Prüfstand nach Anspruch 2,
**dadurch gekennzeichnet, dass**
das Federelement (13) mit wenigstens zwei Haltern (16) verbunden ist.

4. Prüfstand nach einem der vorhergehenden Ansprüche,
**dadurch gekennzeichnet, dass**
wenigstens zwei Federelemente (13) mit einer einzelnen Anlenkstelle (14) am Boden (15) verbunden sind.

5. Prüfstand nach einem der Ansprüche 2 bis 4,
**dadurch gekennzeichnet,dass**
jeweils ein einzelner Halter (16) über ein einzelnes Federelement (13) mit einer einzelnen Fixierstelle oder Anlenkstelle (14) gekoppelt ist.

6. Prüfstand nach einem der Ansprüche 2 bis 5,
**dadurch gekennzeichnet, dass**
das Federelement (13) unmittelbar mit dem Halter (16) verbunden ist.

7. Prüfstand nach einem der vorhergehenden Ansprüche,
**dadurch gekennzeichnet, dass**
das Federelement (13) mit dem Halter (16) und/oder der Anlenkstelle (14) durch ein flexibles Zugmittel (17) oder ein starres Druck- und Zugmittel (18) verbunden ist.

8. Prüfstand nach Anspruch 7,
**dadurch gekennzeichnet, dass**
das Zugmittel (17) zwischen dem Halter (16) und dem Federelement (13) über eine Umlenkrolle (19) geführt ist derart, dass das Federelement (13) im Wesentlichen horizontal ausgerichtet ist.

9. Prüfstand nach einem der vorhergehenden Ansprüche,
**dadurch gekennzeichnet, dass**
ein Lastmittel (31) an der Anlenkstelle (14) befestigt und mit dem Rotorblatt (10) für den Prüfbetrieb verbindbar ist derart, dass das Rotorblatt (10) mit einer statischen Vorspannkraft beaufschlagbar ist, deren Kraftrichtung wenigstens eine Komponente aufweist, die senkrecht zum Rotorblatt (10) verläuft.

10. Prüfstand nach einem der vorhergehenden Ansprüche,
**dadurch gekennzeichnet, dass**
zwischen dem Federelement (13) und dem Halter (16) ein Übersetzungsgetriebe, insbesondere ein zweiseitiger Hebel (37) oder ein Flaschenzug (38), angeordnet ist derart, dass ein Federweg des Federelements (13) in einen Amplitudenweg des Halters (16) übertragbar ist, wobei der Amplitudenweg des Halters (16) größer als der Federweg des Federelements (13) ist.

11. Prüfstand nach einem der vorhergehenden Ansprüche,
**dadurch gekennzeichnet, dass**
das Federelement (13) einen hydropneumatischen Zylinder (32) umfasst, der zumindest teilweise das Federelement (13) bildet.

12. Anordnung mit einem Prüfstand nach Anspruch 1 und einem Rotorblatt (10) oder einem Rotorblattsegment, jeweils für eine Windkraftanlage, mit
- einer Tragstruktur (15), an der ein axiales Ende des Rotorblattes (10) befestigt ist, und
- wenigstens einem Anregungsaggregat, das zur Anregung einer Schwingung des Rotorblatts (10) mit dem Rotorblatt (10) verbunden ist,
wobei wenigstens ein Federelement (13), das zwischen einer im Prüfbetrieb ortsfesten Anlenkstelle (14) und dem Rotorblatt geschaltet ist, an der Anlenkstelle (14) befestigt und mit dem Rotorblatt (10) für den Prüfbetrieb verbunden ist derart, dass das Rotorblatt (10) zur Beeinflussung des Schwingungsverhaltens durch das Federelement (13) mit einer Federkraft beaufschlagbar ist, deren Kraftrichtung wenigstens eine Komponente aufweist, die parallel zu einer Hauptbelastungsrichtung des Rotorblatts (10) verläuft.

13. Verfahren zum Betreiben eines Prüfstands für ein Rotorblatt (10) für eine Windkraftanlage, mit
- einer Tragstruktur (15), an der ein axiales Ende des Rotorblattes (10) befestigt ist, und
- wenigstens einem Anregungsaggregat, das zur Anregung einer Schwingung des Rotorblatts (10) mit dem Rotorblatt (10) verbunden ist,
wobei wenigstens ein Federelement (13), das zwischen einer im Prüfbetrieb ortsfesten Anlenkstelle (14) und dem Rotorblatt geschaltet und an der Anlenkstelle (14) befestigt ist, mit dem Rotorblatt (10) für den Prüfbetrieb verbunden und das Rotorblatt (10) zur Beeinflussung des Schwingungsverhaltens durch das Federelement (13) mit einer Federkraft beaufschlagt wird, deren Kraftrichtung wenigstens eine Komponente aufweist, die parallel zu einer Hauptbelastungsrichtung des Rotorblatts (10) verläuft, wobei die Federsteifigkeit des Federelements (13) derart eingestellt wird, dass wenigstens eine Eigenfrequenz des Rotorblatts (10) oder des Rotorblattsegments erhöht wird.

## Claims

1. Test bench for a rotor blade (10) for a wind power station having a supporting structure (15) to which an axial end of the rotor blade (10) can be fixed, and comprising at least one stimulation unit that can be connected with the rotor blade (10) for stimulating vibration of the rotor blade (10)
**characterized by**
spring elements (13) each connected between an articulation point (14), which is stationary during the test operation, and the rotor blade, are attached to the articulation point (14) and can be connected with the rotor blade (10) for the test operation such that the rotor blade (10), for influencing the vibration behavior, can be acted upon by the spring elements (13) with spring forces, the force direction thereof exhibiting at least one component which is parallel to a main load direction of the rotor blade (10).

2. Test bench according to claim 1,
**characterized in that**
at least one holder (16) is provided which can be connected directly with the rotor blade (10) and is connected with the spring element (13).

3. Test bench according to claim 2,
**characterized in that**
the spring element (13) is connected with at least two holders (16).

4. Test bench according to any one of the preceding claims,
**characterized in that**
at least two spring elements (13) are connected with a single articulation point (14) on the ground (15).

5. Test bench according to any one of claims 2 to 4,
**characterized in that**
in each case a single holder (16) is coupled with a single fixing point or articulation point (14) via a single spring element (13).

6. Test bench according to any one of claims 2 to 5,
**characterized in that**
the spring element (13) is directly connected with the holder (16).

7. Test bench according to any one of the preceding claims,
**characterized in that**
the spring element (13) is connected with the holder (16) and/or the articulation point (14) through a flexible traction means (17) or a rigid pressing and traction means (18).

8. Test bench according to claim 7,
**characterized in that**
between the holder (16) and the spring element (13), the traction means (17) is guided over a deflection roller (19) such that the spring element (13) is oriented to be essentially horizontal.

9. Test bench according to any one of the preceding claims,
**characterized in that**
a load means (31) is attached to the articulation point (14) and can be connected with the rotor blade (10) for test operation such that the rotor blade (10) can be acted upon by a static biasing force, the force direction thereof exhibiting at least one component which is perpendicular to the rotor blade (10).

10. Test bench according to any one of the preceding claims,
**characterized in that**
between the spring element (13) and the holder (16), a transmission gear such as a double-sided lever (37) or a pulley (38) is arranged such that a spring travel of the spring element (13) can be transferred to an amplitude travel of the holder (16), wherein the holder's (16) amplitude travel is greater than the spring element's (13) spring travel.

11. Test bench according to any one of the preceding claims,
**characterized in that**
the spring element (13) comprises a hydropneumatic cylinder (32) which at least partially constitutes the spring element (13).

12. Assembly with a test bench according to claim 1 and a rotor blade (10) or a rotor blade segment, in each case for a wind power station, comprising
- a supporting structure (15) to which an axial end of the rotor blade (10) is fixed, and
- at least one stimulation unit that is connected with the rotor blade (10) for stimulating vibration of the rotor blade (10),
wherein at least one spring element (13) connected between an articulation point (14), which is stationary during the test operation, and the rotor blade, is attached to the articulation point (14) and connected with the rotor blade (10) for the test operation such that, for influencing the vibration behavior, the rotor blade (10) can be acted upon by the spring element (13) with a spring force, the force direction thereof exhibiting at least one component which is parallel to a main load direction of the rotor blade (10).

13. Method for operating a test bench for a rotor blade (10) for a wind power station, comprising:
- a supporting structure (15) to which an axial end of the rotor blade (10) is fixed, and
- at least one stimulation unit that is connected with the rotor blade (10) for stimulating vibration of the rotor blade (10),
wherein at least one spring element (13) connected between an articulation point (14), which is stationary during the test operation, and the rotor blade, is attached to the articulation point (14) and connected with the rotor blade (10) for the test operation such that the rotor blade (10), for influencing the vibration behavior, being acted upon by the spring element (13) with a spring force, the force direction thereof exhibiting at least one component which is parallel to a main load direction of the rotor blade (10), wherein the spring rigidity of the spring element (13) is set such that at least a natural frequency of the rotor blade (10) or rotor blade segment is increased.

## Revendications

1. Banc d'essai pour une pale de rotor (10) destinée à une éolienne pourvue d'une structure de support (15) sur laquelle peut être fixée une extrémité axiale de la pale de rotor (10), et au moins une unité d'excitation qui est susceptible d'être reliée à la pale de rotor (10) pour exciter une oscillation de la pale de rotor (10),
**caractérisé par**
des éléments élastiques (13) qui sont agencés chacun entre un point d'articulation (14) stationnaire pendant l'essai en cours et la pale de rotor, qui sont fixés au point d'articulation (14) et susceptibles d'être reliés à la pale de rotor (10) pour le fonctionnement d'essai, de telle sorte que la pale de rotor (10) est susceptible d'être sollicitée par des forces élastiques au moyen des éléments élastiques (13) en vue d'influencer le comportement d'oscillation, forces dont la direction présente au moins une composante qui s'étend parallèlement à une direction de charge principale de la pale de rotor (10).

2. Banc d'essai selon la revendication 1,
**caractérisé en ce que**
il est prévu au moins un élément de retenue (16) qui est susceptible d'être relié directement à la pale de rotor (10) et qui est relié à l'élément élastique (13).

3. Banc d'essai selon la revendication 2,
**caractérisé en ce que**
l'élément élastique (13) est relié à au moins deux éléments de retenue (16).

4. Banc d'essai selon l'une des revendications précédentes,
**caractérisé en ce que**
au moins deux éléments élastiques (13) sont reliés à un point d'articulation unique (14) au sol (15).

5. Banc d'essai selon l'une des revendications 2 à 4,
**caractérisé en ce que**
un élément de retenue individuel respectif (16) est couplé à un unique point de fixation ou point d'articulation (14) via un élément élastique unique (13).

6. Banc d'essai selon l'une des revendications 2 à 5,
**caractérisé en ce que**
l'élément élastique (13) est relié directement à l'élément de retenue (16).

7. Banc d'essai selon l'une des revendications précédentes,
**caractérisé en ce que**
l'élément élastique (13) est relié à l'élément de retenue (16) et/ou au point d'articulation (14) par un moyen de traction flexible (17) ou par un moyen de compression et de traction rigide (18).

8. Banc d'essai selon la revendication 2,
**caractérisé en ce que**
le moyen de traction (17) est mené par un galet de renvoi (19) entre l'élément de retenue (16) et l'élément élastique (13) de telle sorte que l'élément élastique (13) est orienté sensiblement horizontalement.

9. Banc d'essai selon l'une des revendications précédentes,
**caractérisé en ce que**
un moyen de charge (31) est fixé au point d'articulation (14) et est susceptible d'être relié à la pale de rotor (10) pour le fonctionnement d'essai de telle sorte que la pale de rotor (10) est susceptible d'être sollicitée par une force de précontrainte statique dont la direction présente au moins une composante qui s'étend perpendiculairement à la pale de rotor (10).

10. Banc d'essai selon l'une des revendications précédentes,
**caractérisé en ce que**
un engrenage multiplicateur, en particulier un levier bilatéral (37) ou un palan (38), est agencé entre l'élément élastique (13) et l'élément de retenue (16), de telle sorte qu'une course de débattement de l'élément élastique (13) est transmissible en une course d'amplitude de l'élément de retenue (16), la course d'amplitude de l'élément de retenue (16) étant supérieure à la course de débattement de l'élément élastique (13).

11. Banc d'essai selon l'une des revendications précédentes,
**caractérisé en ce que**
l'élément élastique (13) comprend un cylindre (32) hydropneumatique qui constitue au moins partiellement l'élément élastique (13).

12. Agencement comportant un banc d'essai selon la revendication 1 et une pale de rotor (10) ou un segment de pale de rotor pour une éolienne, comportant
- une structure de support (15) sur laquelle est fixée une extrémité axiale de la pale de rotor (10), et
- au moins une unité d'excitation qui est reliée à la pale de rotor (10) pour exciter une oscillation de la pale de rotor (10),
dans lequel au moins un élément élastique (13) disposé entre un point d'articulation (14), stationnaire pendant l'essai en cours, et la pale de rotor est fixé au point d'articulation (14) et est relié à la pale de rotor (10) pour le fonctionnement d'essai, de telle sorte que la pale de rotor (10) est susceptible d'être sollicitée par une force élastique au moyen de l'élément élastique (13) en vue d'influencer le comportement d'oscillation, force dont la direction présente au moins une composante qui s'étend parallèlement à une direction de charge principale de la pale de rotor (10).

13. Procédé pour faire fonctionner un banc d'essai pour une pale de rotor (10) destinée à une éolienne, comportant
- une structure de support (15) sur laquelle est fixée une extrémité axiale de la pale de rotor (10), et
- au moins une unité d'excitation qui est reliée à la pale de rotor (10) pour exciter une oscillation de la pale de rotor (10),
dans lequel au moins un élément élastique (13) disposé entre un point d'articulation (14), stationnaire pendant l'essai en cours, et la pale de rotor est fixé au point d'articulation (14) et est relié à la pale de rotor (10) pour le fonctionnement d'essai, de telle sorte que la pale de rotor (10) est sollicitée par une force élastique au moyen de l'élément élastique (13) en vue d'influencer le comportement d'oscillation, force dont la direction présente au moins une composante qui s'étend parallèlement à une direction de charge principale de la pale de rotor (10),
la rigidité de l'élément élastique (13) étant réglée de manière à augmenter au moins une fréquence propre de la pale de rotor (10) ou du segment de pale de rotor.
